# EUROPÄISCHE PATENTANMELDUNG

(11) **EP 3 239 752 A1**
(43) Veröffentlichungstag der Anmeldung: **01.11.2017**
(21) Anmeldenummer: 17168530.8
(22) Anmeldetag: 27.04.2017
(51) Int. Cl.: G02B 6/44

(54) **KABELMANAGEMENTVORRICHTUNG UND VERFAHREN MIT EINER KABELMANAGEMENTVORRICHTUNG**

(30) Priorität: 28.04.2016 DE 102016107915
(71) Anmelder: Reichle & De-Massari AG, 8620 Wetzikon (CH)
(72) Erfinder: Zurkirchen, Marco, 8608 Bubikon (CH); Zollinger, Patrick, 8117 Fällanden (CH)
(74) Vertreter: Daub, Thomas

(57) **Zusammenfassung**

Die Erfindung geht aus von einer Kabelmanagementvorrichtung, insbesondere für Lichtwellenleiterkabel, mit zumindest einem Modulhalter (10a, 11a; 10c) und mit zumindest einem Kabelmanagementmodul (12a; 12b; 12c), welches wenigstens eine Halteeinheit (14a; 14b) zur beweglichen Halterung an dem Modulhalter (10a, 11a; 10c) aufweist.

Es wird vorgeschlagen, dass das Kabelmanagementmodul (12a; 12b; 12c) zumindest ein Verformungselement (16a, 18a; 16c, 18c) aufweist, welches bei einer Schwenkbewegung des Kabelmanagementmoduls (12a; 12b; 12c) um eine Drehachse (20a) zu einer zumindest teilweisen Verformung vorgesehen ist und welches zumindest einen Teil einer Schwenkachse (26a) des Kabelmanagementmoduls (12a; 12b; 12c) ausbildet.

## Beschreibung

### Stand der Technik

Die Erfindung geht aus von einer Kabelmanagementvorrichtung nach dem Oberbegriff des Anspruchs 1 und von einem Verfahren mit einer Kabelmanagementvorrichtung nach dem Oberbegriff des Anspruchs 14.

Aus der WO 2013/075966 A1 ist eine Kabelmanagementvorrichtung für Lichtwellenleiterkabel bekannt, welche einen Modulhalter sowie mehrere mit dem Modulhalter verbindbare Kabelmanagementmodule umfasst, wobei der Modulhalter Verformungselemente aufweist, welche sich bei einer Schwenkbewegung des Kabelmanagementmoduls verformen.

Die Aufgabe der Erfindung besteht insbesondere darin, eine gattungsgemäße Kabelmanagementvorrichtung mit verbesserten Eigenschaften hinsichtlich einer Funktionsweise bereitzustellen. Die Aufgabe wird durch die kennzeichnenden Merkmale der Patentansprüche 1 und 14 gelöst, während vorteilhafte Ausgestaltungen und Weiterbildungen der Erfindung den Unteransprüchen entnommen werden können.

### Vorteile der Erfindung

Die Erfindung geht aus von einer Kabelmanagementvorrichtung, insbesondere für Lichtwellenleiterkabel und/oder Kupferkabel, mit zumindest einem Modulhalter und mit zumindest einem Kabelmanagementmodul, welches wenigstens eine Halteeinheit zur beweglichen Halterung an dem Modulhalter aufweist.

Es wird vorgeschlagen, dass das Kabelmanagementmodul zumindest ein Verformungselement aufweist, welches bei einer Schwenkbewegung des Kabelmanagementmoduls um eine Drehachse zu einer zumindest teilweisen und vorteilhaft wesentlichen Verformung vorgesehen ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Kabelmanagementvorrichtung" soll in diesem Zusammenhang insbesondere zumindest ein Teil, insbesondere eine Unterbaugruppe, eines Kabelmanagementsystems, wie beispielsweise einer Kabelmuffe und/oder eines Rangierfelds, verstanden werden. Insbesondere kann die Kabelmanagementvorrichtung dabei auch zumindest ein Kabel, insbesondere Lichtwellenleiterkabel und/oder Kupferkabel, und/oder zumindest eine Trägereinheit umfassen, welche insbesondere zur, insbesondere mittelbaren und/oder unmittelbaren, Aufnahme und/oder Befestigung zumindest eines Bauteils der Kabelmanagementvorrichtung, vorteilhaft des Modulhalters und/oder des Kabelmanagmentmoduls, vorgesehen sein kann. Ferner soll unter einem "Modulhalter" insbesondere eine Einheit verstanden werden, welche dazu vorgesehen ist, zumindest ein Kabelmanagementmodul und vorteilhaft zumindest zwei, zumindest drei und/oder zumindest vier, Kabelmanagementmodule aufzunehmen und insbesondere zu lagern. Insbesondere weist der Modulhalter dazu zumindest eine Lagereinheit auf, welche insbesondere korrespondierend zu der Halteeinheit ausgebildet ist und insbesondere dazu vorgesehen ist, in einem montierten Zustand des Kabelmanagementmoduls mit der Halteeinheit zusammenzuwirken. Vorteilhaft ist der Modulhalter dabei zu einer lösbaren Halterung des Kabelmanagementmoduls vorgesehen. Zudem ist der Modulhalter besonders bevorzugt modular erweiterbar ausgebildet. Unter der Wendung "modular erweiterbar" soll dabei insbesondere verstanden werden, dass die Kabelmanagementvorrichtung mittels einer beliebigen Anzahl an, vorteilhaft zu dem Modulhalter zumindest im Wesentlichen baugleichen und/oder bevorzugt zumindest im Wesentlichen identisch ausgebildeten, weiteren Modulhaltern erweiterbar ist. Unter "zumindest im Wesentlichen baugleichen" Objekten sollen dabei insbesondere Objekte verstanden werden, welche zumindest teilweise äquivalent zueinander ausgebildet sind, sich jedoch insbesondere in zumindest einem Merkmal, wie beispielsweise einem inneren Aufbau, einer Funktionsweise, einer Außenform und/oder einer Außenerstreckung, voneinander unterscheiden können. Unter der Wendung "zumindest im Wesentlichen identisch" soll dabei insbesondere abgesehen von Fertigungstoleranzen und/oder im Rahmen fertigungstechnischer Möglichkeiten und/oder im Rahmen standardisierter Toleranzen identisch verstanden werden.

Darüber hinaus soll unter einem "Kabelmanagementmodul" insbesondere eine, insbesondere mittels der Halteeinheit an dem Modulhalter montierbare, Einheit verstanden werden, welche insbesondere zumindest einen Kabelaufnahmebereich definiert und vorteilhaft zumindest zu einer Handhabung, insbesondere einer Führung, einer Verbindung, einer Kopplung und/oder einer Verteilung, von Kabeln, vorteilhaft einer Vielzahl von Kabeln, vorzugsweise Lichtwellenleiterkabeln, vorgesehen ist. Dazu kann das Kabelmanagementmodul insbesondere zumindest ein Kabelmanagementelement aufweisen, wie beispielsweise ein Steckverbindungselement, ein Abschlusselement, ein Aufteilungselement, ein Führungselement, insbesondere zu einer Kabelführung, und/oder ein Splice-Element. Vorteilhaft weist das Kabelmanagementmodul ferner wenigstens eine Schwenkachse auf, mittels welcher das Kabelmanagementmodul relativ zu dem Modulhalter schwenkbar um die Drehachse ist. Bevorzugt ist die Schwenkachse Teil der Halteeinheit. Zudem ist eine Montagerichtung zur Montage des Kabelmanagementmoduls an dem Modulhalter vorzugsweise zumindest im Wesentlichen parallel zu der Drehachse. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Darüber hinaus soll unter einem "Verformungselement" insbesondere ein, insbesondere zumindest teilweise elastisch und/oder formflexibel ausgebildetes, Element verstanden werden. Vorzugsweise ist das Verformungselement dabei einstückig ausgebildet. Unter "einstückig" soll in diesem Zusammenhang insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Darunter, dass "das Verformungselement bei der Schwenkbewegung des Kabelmanagementmoduls zu einer zumindest teilweisen Verformung vorgesehen ist", soll insbesondere verstanden werden, dass Verformungselement dazu vorgesehen ist, bei der Schwenkbewegung des Kabelmanagementmoduls verbogen und/oder vorteilhaft aus einer Ausgangsform, vorzugsweise elastisch, ausgelenkt zu werden. Vorteilhaft ist das Verformungselement dabei wiederholt, insbesondere zumindest 100-mal, insbesondere beschädigungsfrei, verformbar und strebt insbesondere nach einer Verformung selbstständig und/oder automatisch, insbesondere durch eine innere Spannkraft, wieder der Ausgangsform zu. Unter einer "wesentlichen Verformung" soll insbesondere eine Verformung verstanden werden, wobei eine Position eines Teilbereichs und/oder eines Teils des Verformungselements um zumindest 0,2 mm, vorteilhaft um zumindest 0,5 mm, vorzugsweise um zumindest 1 mm und besonders bevorzugt um zumindest 2 mm relativ zu der Ausgangsform abweicht. Durch diese Ausgestaltung kann eine gattungsgemäße Kabelmanagementvorrichtung mit verbesserten Eigenschaften hinsichtlich einer Funktionsweise bereitgestellt werden. Insbesondere kann dabei eine Wartung und/oder ein Austausch von Kabelmanagementmodulen, wie beispielsweise bei einem Defekt und/oder einer Beschädigung eines Verformungselements vorteilhaft einfach und/oder schnell erfolgen, insbesondere ohne eine Position und/oder Anordnung von Kabeln weiterer Kabelmanagementmodule zu beeinflussen. Hierdurch kann insbesondere eine Dauerfestigkeit und/oder eine Standzeit der Kabelmanagementvorrichtung verbessert werden. Zudem kann vorteilhaft eine Effizienz, insbesondere eine Bauraumeffizienz, eine Bauteileeffizienz, eine Zeiteffizienz, eine Wartungseffizienz und/oder eine Kosteneffizienz, verbessert werden.

Ferner wird vorgeschlagen, dass das Kabelmanagementmodul bei der Schwenkbewegung von wenigstens einer ersten Halteposition in wenigstens eine, insbesondere von der ersten Halteposition verschiedene, zweite Halteposition und/oder umgekehrt bewegbar ist und die Halteeinheit dazu vorgesehen ist, das Kabelmanagementmodul in zumindest einer der Haltepositionen, insbesondere zumindest temporär, zu halten. Insbesondere ist das Verformungselement dabei zumindest dazu vorgesehen ist, bei einer Bewegung und/oder während eines Bewegungsvorgangs des Kabelmanagementmoduls von der ersten Halteposition in die zweite Halteposition und/oder umgekehrt zumindest teilweise verformt zu werden. Vorteilhaft ist die Halteeinheit dazu vorgesehen, das Kabelmanagementmodul zumindest entgegen einer auf das Kabelmanagementmodul wirkenden Schwerkraft und/oder einer Gewichtskraft des Kabelmanagementmoduls in der Halteposition zu halten. Besonders bevorzugt kann zumindest eine der Haltepositionen einer Rastposition entsprechen. Hierdurch kann insbesondere eine vorteilhafte Zugänglichkeit erreicht werden.

Ist das Verformungselement an einer dem Modulhalter zugewandten Seite des Kabelmanagementmoduls angeordnet, kann insbesondere eine vorteilhaft einfache Verformung erreicht werden.

Eine vorteilhaft kompakte Kabelmanagementvorrichtung und/oder ein vorteilhafter Kraftfluss, insbesondere bei der Schwenkbewegung des Kabelmanagementmoduls, kann insbesondere erreicht werden, wenn das Verformungselement Teil der Halteeinheit ist. Insbesondere weist die Halteeinheit in diesem Fall das Verformungselement auf.

In einer Ausgestaltung der Erfindung wird vorgeschlagen, dass das Verformungselement eine Haupterstreckungsrichtung aufweist, welche zumindest im Wesentlichen parallel zu der Drehachse angeordnet ist. Unter einer "Haupterstreckungsrichtung" eines Objekts soll insbesondere eine Richtung verstanden werden, welche parallel zu einer längsten Kante und/oder Seite eines kleinsten das Objekt gerade noch umschließenden, insbesondere gedachten, Quaders ist. Bevorzugt ist die Haupterstreckungsrichtung des Verformungselements dabei zumindest im Wesentlichen parallel zu der Montagerichtung zur Montage des Kabelmanagementmoduls an dem Modulhalter. Hierdurch kann insbesondere eine vorteilhaft einfache Verformung des Verformungselements erreicht werden.

Das Verformungselement bildet zumindest einen Teil einer Schwenkachse des Kabelmanagementmoduls, insbesondere der bereits zuvor genannten Schwenkachse, mittels welcher das Kabelmanagementmodul relativ zu dem Modulhalter schwenkbar um die Drehachse ist, aus. Hierdurch kann insbesondere eine Stabilität verbessert und/oder ein benötigter Platzbedarf minimiert werden.

Des Weiteren wird vorgeschlagen, dass das Verformungselement zumindest abschnittsweise einen Querschnitt mit zwei senkrecht zueinander angeordneten Erstreckungslängen aufweist, welche um zumindest 10 %, vorteilhaft um zumindest 20 % und besonders bevorzugt um zumindest 30 %, voneinander abweichen. Vorteilhaft weist das Verformungselement über eine zumindest im Wesentlichen gesamte Haupterstreckungslänge des Verformungselements einen Querschnitt mit zwei senkrecht zueinander angeordneten Erstreckungslängen auf, welche um zumindest 10 %, vorteilhaft um zumindest 20 % und besonders bevorzugt zumindest 30 % voneinander abweichen. Insbesondere ist der Querschnitt dabei zumindest im Wesentlichen senkrecht zu der Haupterstreckungsrichtung des Verformungselements und vorzugsweise zumindest im Wesentlichen senkrecht zu der Drehachse angeordnet. Vorteilhaft ist eine, insbesondere längere, erste Erstreckungslänge der Erstreckungslängen zumindest im Wesentlichen senkrecht zu einer Haupterstreckungsebene des Kabelmanagementmoduls angeordnet. Zudem ist vorzugsweise eine, insbesondere kürzere, zweite Erstreckungslänge der Erstreckungslängen zumindest im Wesentlichen parallel zu der Haupterstreckungsebene des Kabelmanagementmoduls angeordnet und definiert besonders bevorzugt eine Vorzugsverformungsrichtung und/oder Vorzugsbiegerichtung des Verformungselements. Unter einer "Haupterstreckungslänge" eines Objekts soll in diesem Zusammenhang insbesondere eine Erstreckung des Objekts in eine Haupterstreckungsrichtung des Objekts verstanden werden. Ferner soll unter einer "eine zumindest im Wesentlichen gesamten Haupterstreckungslänge" eines Objekts insbesondere zumindest 70 %, vorteilhaft zumindest 80 % und besonders bevorzugt zumindest 90 % einer gesamten Haupterstreckungslänge des Objekts verstanden werden. Darüber hinaus soll der Ausdruck "zumindest im Wesentlichen senkrecht" insbesondere eine Ausrichtung einer Richtung relativ zu einer Bezugsrichtung definieren, wobei die Richtung und die Bezugsrichtung, insbesondere in einer Ebene betrachtet, einen Winkel insbesondere zwischen 82° und 98°, vorteilhaft zwischen 85° und 95° und besonders bevorzugt zwischen 88° und 92° einschließen. Ferner soll unter einer "Haupterstreckungsebene" eines Objekts insbesondere eine Ebene verstanden werden, welche parallel zu einer größten Seitenfläche eines kleinsten, insbesondere gedachten, Quaders ist, welcher das Objekt gerade noch vollständig umschließt, und vorteilhaft durch einen Mittelpunkt, insbesondere einen geometrischen Mittelpunkt, des Quaders verläuft. Hierdurch kann eine vorteilhafte Vorzugsverformungsrichtung und/oder Vorzugsbiegerichtung des Verformungselements festgelegt werden.

Eine besonders vorteilhafte Spannungsverteilung kann insbesondere erreicht werden, wenn der Querschnitt zumindest im Wesentlichen rechteckig ausgebildet ist. Unter einem "zumindest im Wesentlichen rechteckigen" Objekt soll in diesem Zusammenhang insbesondere ein Objekt verstanden werden, welches von einem rechteckigen Referenzobjekt mit einem Flächenanteil von höchstens 20 %, vorzugsweise von höchstens 15 % und besonders bevorzugt von höchstens 10 % abweicht.

Ferner wird vorgeschlagen, dass das Kabelmanagementmodul zumindest ein Abstützelement aufweist, welches den Modulhalter im montierten Zustand, insbesondere mittelbar und/oder vorteilhaft unmittelbar, kontaktiert und bei der Schwenkbewegung eine Kraft auf das Verformungselement ausübt und/oder überträgt, insbesondere um das Verformungselement zu verformen. Insbesondere stützt sich das Abstützelement bei der Schwenkbewegung dabei derart an dem Modulhalter ab, dass bei der Schwenkbewegung eine Kraft auf das Verformungselement ausgeübt wird, wodurch das Verformungselement verformt wird. Vorteilhaft ist das Abstützelement Teil der Halteeinheit. Zudem weist das Abstützelement bevorzugt eine Haupterstreckungsrichtung auf, welche zumindest im Wesentlichen senkrecht zu der Haupterstreckungsrichtung des Verformungselements und/oder der Drehachse ist. Darüber hinaus ist das Verformungselement vorteilhaft dazu vorgesehen, eine rückstellen Kraft, insbesondere Haltekraft, auf Abstützelement auszuüben, vorteilhaft um das Kabelmanagementmodul in zumindest einer der Halteposition zu halten. Hierdurch kann insbesondere eine vorteilhaft einfache Verformung des Verformungselements erreicht werden. Zudem kann das Kabelmanagementmodul insbesondere auch mit herkömmlichen Modulhaltern verbunden werden, wodurch das Kabelmanagementmodul vorteilhaft auch als Nachrüstbauteil eingesetzt werden kann. Zudem kann vorteilhaft eine Kosteneffizienz verbessert werden, insbesondere da auf bereits bekannte und/oder kommerziell erhältliche Modulhalter zurückgegriffen werden kann. Zudem kann das Kabelmanagementmodul vorteilhaft in den Haltepositionen gehalten werden.

Darüber hinaus wird vorgeschlagen, dass der Modulhalter zu einer zumindest teilweisen Entlastung des Verformungselements, insbesondere bei der Schwenkbewegung und/oder in zumindest einer der Haltepositionen und vorzugsweise in sämtlichen Haltepositionen, zumindest eine, vorteilhaft als Entlastungsnut ausgebildete, Entlastungsausnehmung aufweist. Vorteilhaft ist die Entlastungsausnehmung dazu vorgesehen, das Abstützelement bei der Schwenkbewegung zumindest teilweise zu führen und/oder in der Halteposition zumindest teilweise aufzunehmen. Vorzugsweise weist die Entlastungsausnehmung eine Haupterstreckungsrichtung auf, welche zumindest im Wesentlichen parallel zu der Drehachse und/oder der Haupterstreckungsrichtung des Verformungselements angeordnet ist. Hierdurch kann insbesondere eine auf das Verformungselement einwirkende Kraft vorteilhaft an bestimmte Anforderungen angepasst werden.

Gemäß eines weiteren Aspekts der Erfindung, welcher insbesondere für sich allein oder vorteilhaft zusätzlich zu den zuvor genannten Aspekten der Erfindung realisiert werden kann, und bevorzugt mit zumindest einigen, vorteilhaft wenigstens einem Großteil und bevorzugt sämtlichen der zuvor genannten Aspekte kombiniert werden kann, wird eine Kabelmanagementvorrichtung, insbesondere für Lichtwellenleiterkabel und/oder Kupferkabel, vorgeschlagen, mit zumindest einem Modulhalter und mit zumindest einem Kabelmanagementmodul, welches wenigstens eine Halteeinheit zur beweglichen Halterung an dem Modulhalter aufweist, wobei das Kabelmanagementmodul zumindest einen Kabelaufnahmebereich definiert und zur Einführung wenigstens eines Kabels in den Kabelaufnahmebereich zumindest ein Einführhilfselement aufweist, welches zumindest eine Kabelführungsfläche aufweist, welche mit einer Haupterstreckungsebene des Kabelmanagementmoduls einen minimalen Winkel zwischen 5° und 85°, vorteilhaft zwischen 15° und 75° und besonders bevorzugt zwischen 30° und 60°, einschließt. Vorteilhaft ist das Einführhilfselement als Einführschräge ausgebildet. Bevorzugt ragt das Einführhilfselement in eine Richtung normal zu der Haupterstreckungsebene des Kabelmanagementmoduls zumindest teilweise über eine Kabeleinführebene und/oder eine dem Einführhilfselement zugewandte Begrenzungsebene des Kabelmanagementmoduls hinaus. Zudem ist das Einführhilfselement besonders bevorzugt in einem Nahbereich einer Kabeleinführungsöffnung, insbesondere zur Einführung eines Kabels in den Kabelaufnahmebereich, angeordnet. Unter einem "Nahbereich" soll dabei insbesondere ein räumlicher Bereich verstanden werden, welcher aus Punkten gebildet ist, die weniger als ein Viertel, vorzugsweise weniger als ein Sechstel, bevorzugt weniger als ein Achtel und besonders bevorzugt weniger als ein Zehntel einer Haupterstreckungslänge des Kabelmanagementmoduls von einem Referenzpunkt und/oder einem Referenzbauteil, insbesondere der Kabeleinführungsöffnung, entfernt sind und/oder die jeweils einen Abstand von höchstens 30 mm, vorzugsweise von höchstens 20 mm und besonders bevorzugt von höchstens 10 mm von einem Referenzpunkt und/oder einem Referenzbauteil, insbesondere der Kabeleinführungsöffnung, aufweisen. Insbesondere könnte das Kabelmanagementmodul in diesem Fall auch linear beweglich relativ zu dem Modulhalter mit dem Modulhalter verbunden sein. Hierdurch können insbesondere die bereits zuvor genannten Vorteile erreicht werden. Insbesondere kann durch eine entsprechende Ausgestaltung der Kabelmanagementvorrichtung eine Funktionsweise verbessert werden. Insbesondere kann dabei eine Wartung und/oder ein Austausch von Kabelmanagementmodulen, wie beispielsweise bei einem Defekt und/oder einer Beschädigung eines Verformungselements vorteilhaft einfach und/oder schnell erfolgen, insbesondere ohne eine Position und/oder Anordnung von Kabeln weiterer Kabelmanagementmodule zu beeinflussen. Hierdurch kann insbesondere eine Dauerfestigkeit und/oder eine Standzeit der Kabelmanagementvorrichtung verbessert werden. Zudem kann vorteilhaft eine Effizienz, insbesondere eine Bauraumeffizienz, eine Bauteileeffizienz, eine Zeiteffizienz, eine Wartungseffizienz und/oder eine Kosteneffizienz, verbessert werden.

Gemäß eines weiteren Aspekts der Erfindung, welcher insbesondere für sich allein oder vorteilhaft zusätzlich zu den zuvor genannten Aspekten der Erfindung realisiert werden kann, und bevorzugt mit zumindest einigen, vorteilhaft wenigstens einem Großteil und bevorzugt sämtlichen der zuvor genannten Aspekte kombiniert werden kann, wird eine Kabelmanagementvorrichtung, insbesondere für Lichtwellenleiterkabel und/oder Kupferkabel, vorgeschlagen, mit zumindest einem Modulhalter und mit zumindest einem Kabelmanagementmodul, welches wenigstens eine Halteeinheit zur beweglichen Halterung an dem Modulhalter aufweist, wobei das Kabelmanagementmodul zumindest einen Kabelaufnahmebereich definiert und zumindest ein in dem Kabelaufnahmebereich angeordnetes zumindest teilweise flexibel, vorteilhaft elastisch, ausgebildetes Kabelsicherungselement aufweist, welches dazu vorgesehen ist, wenigstens ein in dem Kabelaufnahmebereich angeordnetes Kabel, vorteilhaft einen Großteil von in dem Kabelaufnahmebereich angeordneten Kabel und besonders bevorzugt sämtliche in dem Kabelaufnahmebereich angeordnete Kabel, in zumindest einem Zustand, insbesondere Transportzustand und/oder Anwendungszustand, zu sichern. Vorteilhaft ist das Kabelsicherungselement dabei einstückig ausgebildet. Hierdurch können insbesondere die bereits zuvor genannten Vorteile erreicht werden. Insbesondere kann durch eine entsprechende Ausgestaltung der Kabelmanagementvorrichtung eine Funktionsweise verbessert werden. Insbesondere kann dabei eine Wartung und/oder ein Austausch von Kabelmanagementmodulen, wie beispielsweise bei einem Defekt und/oder einer Beschädigung eines Verformungselements vorteilhaft einfach und/oder schnell erfolgen, insbesondere ohne eine Position und/oder Anordnung von Kabeln weiterer Kabelmanagementmodule zu beeinflussen. Hierdurch kann insbesondere eine Dauerfestigkeit und/oder eine Standzeit der Kabelmanagementvorrichtung verbessert werden. Zudem kann vorteilhaft eine Effizienz, insbesondere eine Bauraumeffizienz, eine Bauteileeffizienz, eine Zeiteffizienz, eine Wartungseffizienz und/oder eine Kosteneffizienz, verbessert werden. Zudem kann vorteilhaft ein vollständig vorkonfektioniertes Kabelmanagementmodul bereitgestellt und sicher transportiert werden.

Das Kabelsicherungselement könnte dabei beispielsweise als Polymerelement, als Elastomerelement, als Silikonelement und/oder als Federelement, insbesondere als eine Druckfeder, ausgebildet sein. In einer bevorzugten Ausgestaltung der Erfindung wird jedoch vorgeschlagen, dass das Kabelsicherungselement als Schaumstoffelement ausgebildet ist, wodurch eine Komplexität verringert und/oder eine Kosteneffizienz verbessert werden kann. Unter einem "Schaumstoffelement" soll in diesem Zusammenhang insbesondere ein Element verstanden werden, welches zumindest teilweise, vorzugsweise zu wenigstens einem Großteil und besonders bevorzugt vollständig, aus Schaumstoff besteht. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden.

Zudem geht die Erfindung aus von einem Verfahren mit einer Kabelmanagementvorrichtung, insbesondere für Lichtwellenleiterkabel und/oder Kupferkabel, welche zumindest einen Modulhalter und zumindest ein Kabelmanagementmodul aufweist, welches wenigstens eine Halteeinheit zur beweglichen Halterung an dem Modulhalter aufweist.

Es wird vorgeschlagen, dass das Kabelmanagementmodul zumindest ein Verformungselement aufweist, welches bei einer Schwenkbewegung des Kabelmanagementmoduls um eine Drehachse zumindest teilweise und vorteilhaft wesentlich verformt wird. Hierdurch kann insbesondere eine Funktionsweise verbessert werden. Insbesondere kann dabei eine Wartung und/oder ein Austausch von Kabelmanagementmodulen, wie beispielsweise bei einem Defekt und/oder einer Beschädigung eines Verformungselements vorteilhaft einfach und/oder schnell erfolgen, insbesondere ohne eine Position und/oder Anordnung von Kabeln weiterer Kabelmanagementmodule zu beeinflussen. Hierdurch kann insbesondere eine Dauerfestigkeit und/oder eine Standzeit der Kabelmanagementvorrichtung verbessert werden. Zudem kann vorteilhaft eine Effizienz, insbesondere eine Bauraumeffizienz, eine Bauteileeffizienz, eine Zeiteffizienz, eine Wartungseffizienz und/oder eine Kosteneffizienz, verbessert werden.

Die Kabelmanagementvorrichtung und das Verfahren mit der Kabelmanagementvorrichtung sollen hierbei nicht auf die oben beschriebene Anwendung und Ausführungsform beschränkt sein. Insbesondere kann die Kabelmanagementvorrichtung und das Verfahren mit der Kabelmanagementvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein beispielhaft als Kabelmuffe ausgebildetes Kabelmanagementsystem mit einer Kabelmanagementvorrichtung in einer schematischen Darstellung,
- Fig. 2: das Kabelmanagementsystem mit der Kabelmanagementvorrichtung umfassend einen Modulhalter und ein daran befestigtes Kabelmanagementmodul in einem geöffneten Zustand,
- Fig. 3: das Kabelmanagementmodul in einer ersten Halteposition,
- Fig. 4: das Kabelmanagementmodul in einer zweiten Halteposition,
- Fig. 5a-b: eine vergrößerte Darstellung einer Befestigung eines Abdeckelements des Kabelmanagementmoduls an einem Kabelgehäuse des Kabelmanagementmoduls,
- Fig. 6: das Kabelmanagementmodul in einem geöffneten Zustand,
- Fig. 7: eine Lagereinheit des Modulhalters und eine Halteeinheit des Kabelmanagementmoduls in einer vergrößerten Darstellung,
- Fig. 8: die Lagereinheit und die Halteeinheit in einer weiteren vergrößerten Darstellung,
- Fig. 9: die Halteeinheit in einer separaten vergrößerten Darstellung,
- Fig. 10: einen Querschnitt durch ein Verformungselement des Kabelmanagementmoduls entlang der Linie X-X in Figur 9,
- Fig. 11: den Modulhalter und das Kabelmanagementmodul in der ersten Halteposition in einer Schnittansicht,
- Fig. 12: den Modulhalter und das Kabelmanagementmodul in der zweiten Halteposition in einer Schnittansicht,
- Fig. 13: ein Kabelmanagementmodul einer weiteren Kabelmanagementvorrichtung in einer perspektivischen Darstellung,
- Fig. 14: ein weiteres Ausführungsbeispiel eines Kabelmanagementsystems mit einer Kabelmanagementvorrichtung umfassend einen Modulhalter und ein daran befestigtes Kabelmanagementmodul,
- Fig. 15: den Modulhalter und das Kabelmanagementmodul aus Figur 14 in einer vergrößerten Darstellung und
- Fig. 16: den Modulhalter und das Kabelmanagementmodul aus Figur 14 in einer Halteposition in einer Schnittansicht.

### Beschreibung der Ausführungsbeispiele

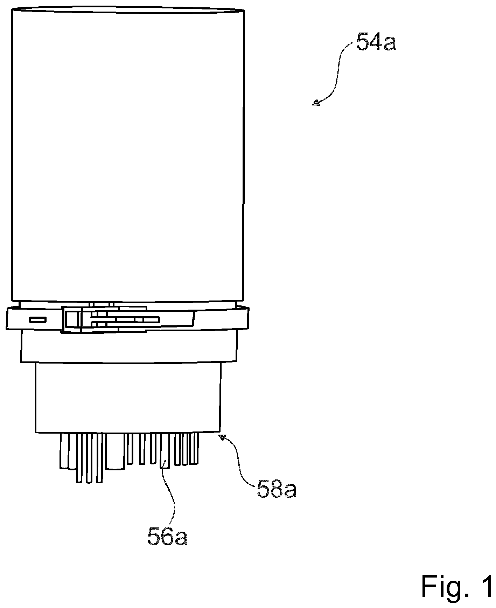

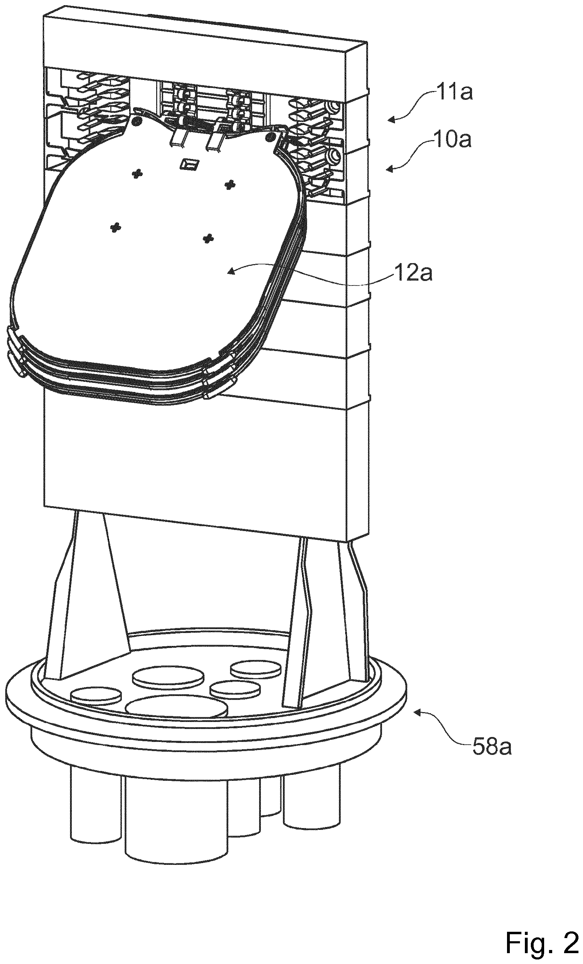

Die Figuren 1 und 2 zeigen ein beispielhaftes Kabelmanagementsystem 54a in einem geschlossenen Zustand und in einem geöffneten Zustand in einer perspektivischen Darstellung. Das Kabelmanagementsystem 54a ist als Kabelkontaktierungswitterungsschutz ausgebildet. Das Kabelmanagementsystem 54a ist im vorliegenden Fall als Kabelmuffe ausgebildet. Das Kabelmanagementsystem 54a ist zur Handhabung von als Lichtwellenleiterkabeln ausgebildeten Kabeln 56a vorgesehen. Auf eine Darstellung einzelner Kabel wird dabei in den Figuren bis auf wenige Ausnahmen verzichtet, um eine angemessene Übersichtlichkeit zu wahren. Das Kabelmanagementsystem 54a umfasst eine Trägereinheit 58a. Die Trägereinheit 58a ist als tragende Struktur ausgebildet und zur Aufnahme zumindest eines Bauteils, insbesondere einer Gewichtskraft des Bauteils, vorgesehen. Grundsätzlich ist jedoch auch denkbar, ein Kabelmanagementsystem als Rangierfeld, wie beispielsweise als Optical Distribution Frame, auszubilden und/oder von Lichtwellenleiterkabeln abweichende Kabel, wie beispielsweise elektrische Kupferkabel, zu verwenden. Darüber hinaus kann ein Kabelmanagementsystem weitere Einheiten aufweisen, wie beispielsweise eine Umhausungseinheit.

Das Kabelmanagementsystem 54a weist ferner eine Kabelmanagementvorrichtung auf. Die Kabelmanagementvorrichtung umfasst zumindest ein Kabelmanagementmodul 12a. Im vorliegenden Fall umfasst die Kabelmanagementvorrichtung eine Mehrzahl von Kabelmanagementmodulen 12a, wobei insbesondere in Figur 2 beispielhaft drei Kabelmanagementmodule 12a gezeigt sind. Die Kabelmanagementmodule 12a sind dabei übereinander angeordnet. Die Kabelmanagementmodule 12a sind zumindest im Wesentlichen identisch zueinander ausgebildet. Alternativ kann ein Kabelmanagementsystem jedoch auch eine beliebige andere Anzahl an Kabelmanagementmodulen und/oder unterschiedlich ausgebildete Kabelmanagementmodule aufweisen.

Ferner umfasst die Kabelmanagementvorrichtung zumindest einen Modulhalter 10a. Der Modulhalter 10a ist an der Trägereinheit 58a befestigt. Der Modulhalter 10a ist dazu vorgesehen, zumindest eines der Kabelmanagementmodule 12a aufzunehmen und insbesondere beweglich zu lagern. Im vorliegenden Fall ist der Modulhalter 10a dazu vorgesehen, vier Kabelmanagementmodule 12a aufzunehmen und insbesondere beweglich zu lagern. Alternativ könnte ein Modulhalter jedoch auch dazu vorgesehen sein, eine beliebige andere Anzahl an Kabelmanagementmodulen aufzunehmen, wie beispielsweise genau ein Kabelmanagementmodul und/oder zumindest vier, zumindest sechs und/oder zumindest acht Kabelmanagementmodule.

Ferner ist der Modulhalter 10a modular erweiterbar ausgebildet. Der Modulhalter 10a kann dabei mittels einer beliebigen Anzahl an, vorteilhaft zu dem Modulhalter 10a zumindest im Wesentlichen baugleichen, weiteren Modulhaltern 11a erweitert werden. Im vorliegenden Fall sind die Modulhalter 10a, 11 a aufeinander steckbar, wodurch insbesondere eine Größe des Kabelmanagementsystems 54a durch Aneinanderreihung einer frei wählbaren Anzahl von Modulhaltern 10a, 11 a ausbaubar ist.

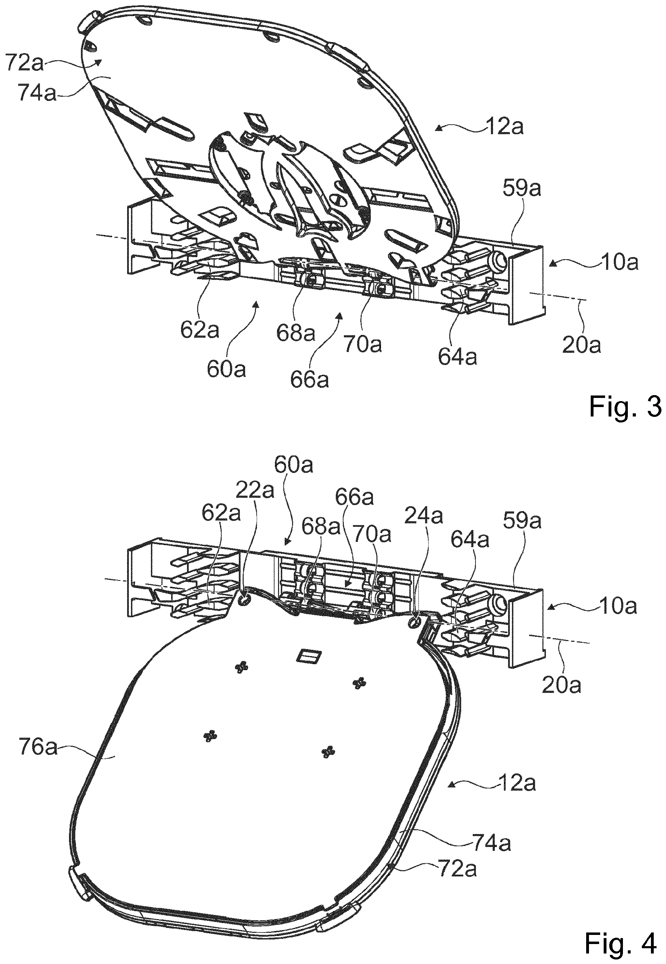

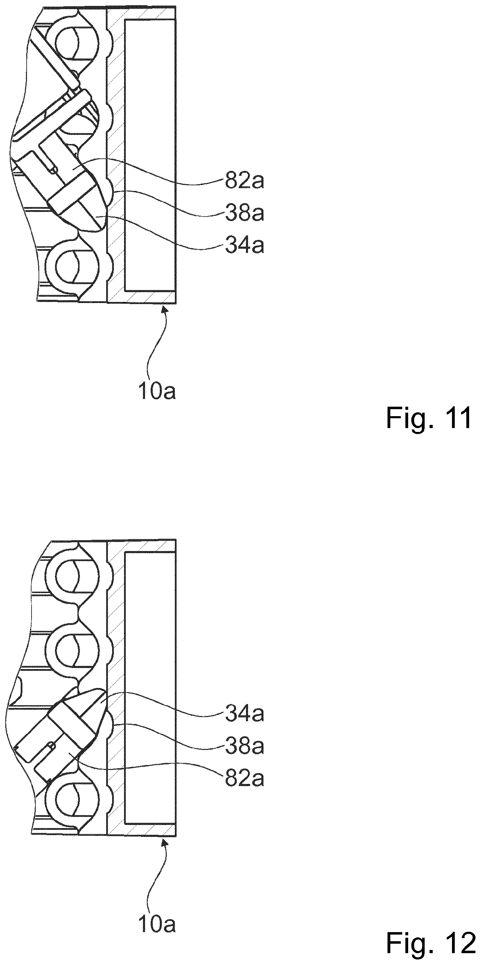

Im Folgenden wird nun unter Verweis auf die Figuren 3 bis 12 ein Modulhalter 10a der Modulhalter 10a, 11 a sowie ein, insbesondere an dem Modulhalter 10a angeordnetes, Kabelmanagementmodul 12a der Kabelmanagementmodule 12a näher beschrieben, wobei die folgende Beschreibung, insbesondere aufgrund der zumindest im Wesentlich baugleichen und/oder identischen Ausgestaltung der Modulhalter 10a, 11a und der Kabelmanagementmodule 12a, auch auf die anderen Modulhalter 11 a und/oder Kabelmanagementmodule übernommen werden kann. Dabei wird zunächst unter Verweis auf die Figuren 3 bis 10 ein genereller Aufbau des Modulhalters 10a und des Kabelmanagementmoduls 12a beschrieben, während mit Verweis auf die Figuren 11 und 12 ein Bewegungsvorgang des Kabelmanagementmoduls 12a aufgezeigt wird.

Der Modulhalter 10a ist einstückig ausgebildet. Der Modulhalter 10a besteht aus Kunststoff. Der Modulhalter 10a ist im vorliegenden Fall als Spritzgussteil ausgebildet. Ein kleinster, insbesondere gedachter, Körper, welcher den Modulhalter 10a gerade vollständig umfasst ist quaderförmig. Der Modulhalter 10a ist ferner länglich ausgebildet und weist eine Haupterstreckungsrichtung auf. Darüber hinaus ist der Modulhalter 10a spiegelsymmetrisch ausgebildet, insbesondere zumindest relativ zu einer Mittenebene des Modulhalters 10a, welche senkrecht zu der Haupterstreckungsrichtung des Modulhalters 10a angeordnet ist. Alternativ ist denkbar, einen Modulhalter mehrteilig und/oder aus einem von Kunststoff abweichenden Material auszubilden. Ferner könnte ein Modulhalter unsymmetrisch ausgebildet werden.

Der Modulhalter 10a umfasst einen Grundkörper 59a. Der Grundkörper 59a ist zumindest im Wesentlichen U-förmig ausgebildet, wobei freie Enden der U-Form in einem montierten Zustand insbesondere dem Kabelmanagementmodul 12a zugewandt sind.

Zudem weist der Modulhalter 10a mehrere Kabelführungseinheiten 60a auf, wobei in den Figuren 3 bis 6 insbesondere der Übersichtlichkeit halber lediglich eine der Kabelführungseinheiten 60a mit einem Bezugszeichen versehen ist. Im vorliegenden Fall weist der Modulhalter 10a vier Kabelführungseinheiten 60a auf, wobei jede der Kabelführungseinheiten 60a zur Zuführung eines Kabels 56a zu einem der Kabelmanagementmodule 12a dient. Die Kabelführungseinheiten 60a sind an dem Grundkörper 59a angeordnet. Die Kabelführungseinheiten 60a sind dabei an einer den Kabelmanagementmodulen 12a zugewandten Seite des Grundkörpers 59a angeordnet. Die Kabelführungseinheiten 60a sind übereinander angeordnet. Die Kabelführungseinheiten 60a sind zumindest im Wesentlichen identisch zueinander. Jede der Kabelführungseinheiten 60a umfasst zwei Kabelführungselemente 62a, 64a. Die Kabelführungselemente 62a, 64a sind bezüglich der Haupterstreckungsrichtung des Modulhalters 10a beabstandet zueinander angeordnet. Die Kabelführungselemente 62a, 64a sind zumindest im Wesentlichen identisch zueinander. Die Kabelführungselemente 62a, 64a sind dabei spiegelsymmetrisch zu der Mittenebene angeordnet. Alternativ könnte ein Modulhalter eine andere Anzahl an Kabelführungseinheiten aufweisen. Vorteilhaft ist die Anzahl an Kabelführungseinheiten dabei an eine Anzahl an von einem Modulhalter aufnehmbaren Kabelmanagementmodulen angepasst. Auch könnte eine Kabelführungseinheit eine andere Anzahl an Kabelführungselementen aufweisen, wie beispielsweise genau ein Kabelführungselement und/oder zumindest drei Kabelführungselemente. Zudem könnte ein Modulhalter prinzipiell auch frei von Kabelführungseinheiten sein.

Ferner ist der Modulhalter 10a dazu vorgesehen, das Kabelmanagementmodul 12a im montierten Zustand schwenkbar um eine, insbesondere parallel zu der Haupterstreckungsrichtung des Modulhalters 10a angeordnete, Drehachse 20a zu lagern. Dazu weist der Modulhalter 10a zumindest eine Lagereinheit 66a auf, wobei in den Figuren 3 bis 6 insbesondere der Übersichtlichkeit halber wiederum lediglich eine der Lagereinheiten 66a mit einem Bezugszeichen versehen ist. Im vorliegenden Fall weist der Modulhalter 10a vier Lagereinheiten 66a auf, wobei jede der Lagereinheiten 66a zur Lagerung eines der Kabelmanagementmodule 12a dient. Die Lagereinheiten 66a sind an dem Grundkörper 59a angeordnet. Die Lagereinheiten 66a sind dabei an einer den Kabelmanagementmodulen 12a zugewandten Seite des Grundkörpers 59a angeordnet. Die Lagereinheiten 66a sind übereinander angeordnet. Die Lagereinheiten 66a sind zumindest im Wesentlichen identisch zueinander. Jede der Lagereinheiten 66a umfasst zwei Lagerelemente 68a, 70a. Die Lagerelemente 68a, 70a sind bezüglich der Haupterstreckungsrichtung des Modulhalters 10a beabstandet zueinander angeordnet. Die Lagerelemente 68a, 70a sind zumindest im Wesentlichen identisch zueinander. Die Lagerelemente 68a, 70a sind dabei spiegelsymmetrisch zu der Mittenebene angeordnet. Darüber hinaus sind die Lagerelemente 68a, 70a zumindest im Wesentlichen hohlzylinderförmig, insbesondere kreiszylinderförmig, ausgebildet. Die Lagerelemente 68a, 70a sind im vorliegenden Fall als Lagerlaschen ausgebildet. Alternativ könnte ein Modulhalter eine andere Anzahl an Lagereinheiten aufweisen. Vorteilhaft ist die Anzahl an Lagereinheiten dabei an eine Anzahl an von einem Modulhalter aufnehmbaren Kabelmanagementmodulen angepasst. Ferner könnte eine Lagereinheit eine andere Anzahl an Lagerelementen aufweisen, wie beispielsweise genau ein Lagerelement und/oder zumindest drei Lagerelemente.

Das Kabelmanagementmodul 12a ist im vorliegenden Fall mehrteilig ausgebildet. Das Kabelmanagementmodul 12a ist zu einer Führung, einer Verbindung, einer Kopplung und/oder einer Verteilung von zumindest einem Kabel 56a, im vorliegenden Fall insbesondere einer Vielzahl von Kabeln 56a, vorgesehen.

Dazu weist das Kabelmanagementmodul 12a eine Kabelmanagementeinheit 72a auf. Die Kabelmanagementeinheit 72a ist zumindest im Wesentlichen rechteckig und/oder oval ausgebildet. Die Kabelmanagementeinheit 72a definiert eine Haupterstreckungsebene des Kabelmanagementmoduls 12a. Die Kabelmanagementeinheit 72a weist eine, insbesondere in der Haupterstreckungsebene angeordnete, Haupterstreckungsrichtung auf, welche im montierten Zustand senkrecht zu der Haupterstreckungsrichtung des Modulhalters 10a angeordnet ist. Die Kabelmanagementeinheit 72a weist eine, insbesondere in der Haupterstreckungsebene und senkrecht zu der Haupterstreckungsrichtung angeordnete, Quererstreckungsrichtung auf, welche im montierten Zustand parallel zu der Drehachse 20a und/oder der Haupterstreckungsrichtung des Modulhalters 10a angeordnet ist. Die Kabelmanagementeinheit 72a ist ferner spiegelsymmetrisch ausgebildet, insbesondere relativ zu einer weiteren Mittenebene der Kabelmanagementeinheit 72a, welche insbesondere senkrecht zu der Quererstreckungsrichtung der Kabelmanagementeinheit 72a angeordnet ist. Im montierten Zustand ist die weitere Mittenebene der Kabelmanagementeinheit 72a zumindest parallel zu der Mittenebene des Modulhalters 10a. Im vorliegenden Fall ist die weitere Mittenebene der Kabelmanagementeinheit 72a im montierten Zustand mit der Mittenebene des Modulhalters 10a identisch. Alternativ ist denkbar, eine Kabelmanagementeinheit zu wenigstens einem Großteil aus einem von Kunststoff abweichenden Material und/oder unsymmetrisch auszubilden. Ferner könnte eine Haupterstreckungsrichtung und eine Quererstreckungsrichtung einer Kabelmanagementeinheit vertauscht sein und/oder eine identische Erstreckungslänge aufweisen. In diesem Zusammenhang könnte eine Kabelmanagementeinheit prinzipiell auch rund ausgebildet sein.

Die Kabelmanagementeinheit 72a umfasst ein Kabelgehäuse 74a. Das Kabelgehäuse 74a besteht zu wenigstens einem Großteil aus Kunststoff. Zudem definiert das Kabelgehäuse 74a einen Kabelaufnahmebereich 40a.

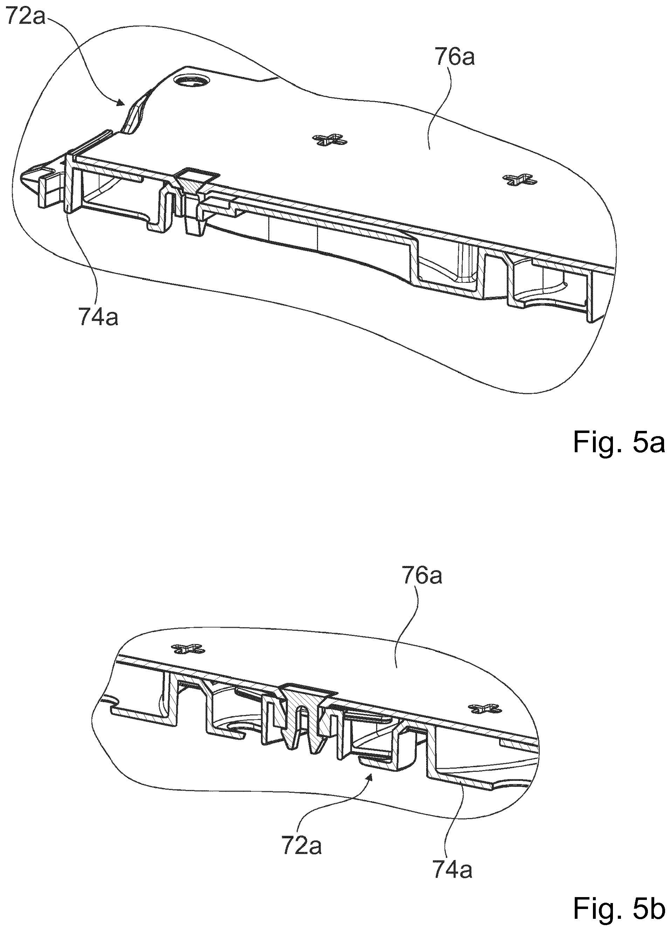

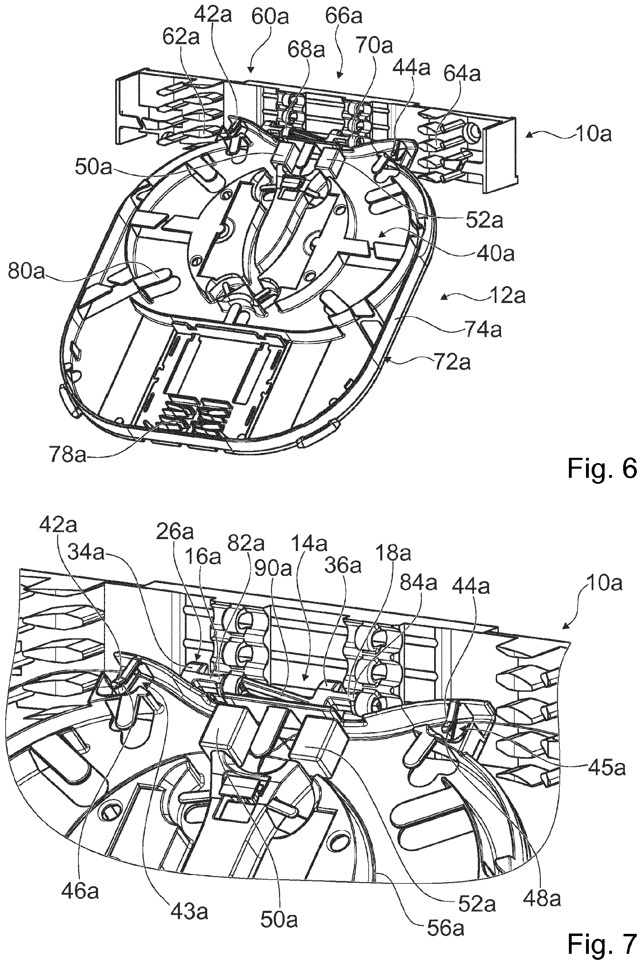

Weiter umfasst die Kabelmanagementeinheit 72a im vorliegenden Fall ein Abdeckelement 76a. Das Abdeckelement 76a ist einstückig ausgebildet. Das Abdeckelement 76a besteht aus Kunststoff. Das Abdeckelement 76a ist als Deckel ausgebildet. Das Abdeckelement 76a ist korrespondierend zu dem Kabelgehäuse 74a ausgebildet. Das Abdeckelement 76a ist in zumindest einem Anwendungsfall an dem Kabelgehäuse 74a befestigt (vgl. insbesondere Figur 4 sowie Figuren 5a und 5b). Das Abdeckelement 76a bildet zusammen mit dem Kabelgehäuse 74a zumindest einen Großteil eines Außengehäuses der Kabelmanagementeinheit 72a. Das Abdeckelement 76a ist dabei zumindest zu einer Abdeckung des Kabelaufnahmebereichs 40a vorgesehen. Zudem ist das Abdeckelement 76a von dem Kabelgehäuse 74a vollständig entfernbar, wodurch insbesondere in einem Wartungsbetriebszustand eine vorteilhafte Zugänglichkeit erreicht werden kann (vgl. insbesondere Figur 6). Prinzipiell könnte auf ein Abdeckelement jedoch auch verzichtet werden. Zudem könnte ein Abdeckelement mehrteilig ausgebildet sein.

Darüber hinaus weist die Kabelmanagementeinheit 72a zumindest ein Kabelmanagementelement 78a, 80a auf. Die Kabelmanagementeinheit 72a kann dabei eine Vielzahl unterschiedlicher Kabelmanagementelemente 78a, 80a aufweisen, wie beispielsweise Steckverbindungselemente, Abschlusselemente, Aufteilungselemente, Führungselemente, insbesondere zur Kabelführung, und/oder Splice-Elemente. Im vorliegenden Fall weist die Kabelmanagementeinheit 72a beispielhaft zumindest zwei unterschiedlich ausgebildete Kabelmanagementelemente 78a, 80a auf. Die Kabelmanagementelemente 78a, 80a sind in dem Kabelaufnahmebereich 40a angeordnet. Ein erstes Kabelmanagementelement 78a der Kabelmanagementelemente 78a, 80a ist dabei beispielhaft als Splice-Element ausgebildet. Zweite Kabelmanagementelement 80a der Kabelmanagementelemente 78a, 80a sind beispielhaft als Rückhalteelemente ausgebildet, wobei in Figur 6 insbesondere der Übersichtlichkeit halber lediglich eines der zweiten Kabelmanagementelemente 80a mit einem Bezugszeichen versehen ist. Alternativ könnte ein Kabelmanagementmodul und/oder eine Kabelmanagementeinheit auch eine andere Anzahl von insbesondere unterschiedlich ausgebildeten Kabelmanagementelementen aufweisen, wie beispielsweise zumindest drei, zumindest vier und/oder zumindest fünf unterschiedliche Kabelmanagementelemente.

Zu einer Einführung eines Kabels 56a in den Kabelaufnahmebereich 40a umfasst, die Kabelmanagementeinheit 72a zumindest ein Einführhilfselement 42a, 44a (vgl. insbesondere Figur 7). Im vorliegenden Fall umfasst die Kabelmanagementeinheit 72a zwei Einführhilfselemente 42a, 44a. Die Einführhilfselemente 42a, 44a sind bezüglich der Quererstreckungsrichtung der Kabelmanagementeinheit 72a beabstandet zueinander angeordnet. Die Einführhilfselemente 42a, 44a sind zumindest im Wesentlichen identisch zueinander. Die Einführhilfselemente 42a, 44a sind dabei spiegelsymmetrisch zu der weiteren Mittenebene angeordnet. Die Einführhilfselemente 42a, 44a sind jeweils in einem Nahbereich einer Kabeleinführungsöffnung zur Einführung eines Kabels 56a in den Kabelaufnahmebereich 40a angeordnet. Im vorliegenden Fall sind die Einführhilfselemente 42a, 44a jeweils in einem Nahbereich einer dem Modulhalter 10a im montierten Zustand zugewandten Seite der Kabelmanagementeinheit 72a angeordnet. Darüber hinaus sind die Einführhilfselemente 42a, 44a jeweils als Einführschräge ausgebildet. Die Einführhilfselemente 42a, 44a ragen dabei in eine Richtung normal zu der Haupterstreckungsebene des Kabelmanagementmoduls 12a zumindest teilweise über eine Kabeleinführebene des Kabelmanagementmoduls 12a hinaus. Zudem weisen die Einführhilfselemente 42a, 44a jeweils zumindest eine Kabelführungsfläche 46a, 48a auf, welche mit der Haupterstreckungsebene des Kabelmanagementmoduls 12a einen minimalen Winkel zwischen 30° und 60°, im vorliegenden Fall insbesondere etwa 45°, einschließt. Insbesondere um dabei mehrere Kabelmanagementmodule 12a dicht übereinander anordnen zu können, weist das Kabelgehäuse 74a jeweils eine in einem Nahbereich der Einführhilfselemente 42a, 44, im vorliegenden Fall insbesondere unterhalb der Einführhilfselemente 42a, 44a angeordnete, Aussparung 43a, 45a auf. Zudem weist das Abdeckelement 76a jeweils eine in einem Nahbereich der Einführhilfselemente 42a, 44, im vorliegenden Fall insbesondere oberhalb der Einführhilfselemente 42a, 44a angeordnete, weitere Aussparung 22a, 24a auf. Alternativ könnte ein Kabelmanagementmodul und/oder eine Kabelmanagementeinheit auch eine andere Anzahl von Einführhilfselementen aufweisen, wie beispielsweise genau ein Einführhilfselement und/oder zumindest drei Einführhilfselemente.

Des Weiteren umfasst die Kabelmanagementeinheit 72a zumindest ein Kabelsicherungselement 50a, 52a. Im vorliegenden Fall umfasst die Kabelmanagementeinheit 72a zwei Kabelsicherungselemente 50a, 52a. Die Kabelsicherungselemente 50a, 52a sind in dem Kabelaufnahmebereich 40a angeordnet. Die Kabelsicherungselemente 50a, 52a sind bezüglich der Quererstreckungsrichtung der Kabelmanagementeinheit 72a beabstandet zueinander angeordnet. Die Kabelsicherungselemente 50a, 52a sind zumindest im Wesentlichen identisch zueinander. Die Kabelsicherungselemente 50a, 52a sind dabei spiegelsymmetrisch zu der weiteren Mittenebene angeordnet.

Ferner sind die Kabelsicherungselemente 50a, 52a einstückig ausgebildet. Die Kabelsicherungselemente 50a, 52a sind quaderförmig ausgebildet. Die Kabelsicherungselemente 50a, 52a sind separat von dem Kabelgehäuse 74a und dem Abdeckelement 76a ausgebildet. Die Kabelsicherungselemente 50a, 52a sind ferner zumindest teilweise flexibel und/oder elastisch ausgebildet. Die Kabelsicherungselemente 50a, 52a sind im vorliegenden Fall jeweils als Schaumstoffelement ausgebildet und bestehen insbesondere vollständig aus Schaumstoff.

Die Kabelsicherungselemente 50a, 52a sind dazu vorgesehen, wenigstens ein in dem Kabelaufnahmebereich 40a angeordnetes Kabel 56a in zumindest einem Zustand zu sichern. Dazu weisen die Kabelsicherungselemente 50a, 52a eine Höhe auf, welche größer als ein Abstand zwischen dem Abdeckelement 76a und einem Boden des Kabelgehäuses 74a ist. Zudem berühren die Kabelsicherungselemente 50a, 52a das wenigstens eine Kabel 56a unmittelbar. Hierdurch werden in einem geschlossenen Zustand des Kabelmanagementmoduls 12a die Kabelsicherungselemente 50a, 52a derart komprimiert, dass die Kabelsicherungselemente 50a, 52a das wenigstens eine Kabel 56a gegen den Boden des Kabelgehäuses 74a drücken und insbesondere zwischen dem Abdeckelement 76a und dem Boden des Kabelgehäuses 74a fixieren und/oder zumindest teilweise einklemmen. Im vorliegenden Fall sind die Kabelsicherungselemente 50a, 52a dabei als Transportsicherung ausgebildet und dazu vorgesehen, das wenigstens eine in dem Kabelaufnahmebereich 40a angeordnete Kabel 56a, eines insbesondere vorkonfektionierten Kabelmanagementmoduls 12a, zu sichern. Alternativ könnte ein Kabelmanagementmodul und/oder eine Kabelmanagementeinheit auch eine andere Anzahl von Kabelsicherungselementen aufweisen, wie beispielsweise genau ein Kabelsicherungselement und/oder zumindest drei Kabelsicherungselemente. Zudem könnte zumindest ein Kabelsicherungselement zur Sicherung wenigstens eines Kabels in einem, insbesondere von einem Transportzustand verschiedenen, Betriebszustand vorgesehen sein. Darüber hinaus ist denkbar, zumindest ein Kabelsicherungselement aus einem von Schaumstoff abweichenden Material zu verwenden, wie beispielsweise aus einem Elastomer und/oder einem Silikon. Zudem könnte ein Kabelsicherungselement prinzipiell auch einstückig mit einem Kabelgehäuse und/oder einem Abdeckelement ausgebildet sein.

Des Weiteren umfasst das Kabelmanagementmodul 12a zur beweglichen Halterung, insbesondere der Kabelmanagementeinheit 72a, an dem Modulhalter 10a eine Halteeinheit 14a (vgl. insbesondere Figuren 7 bis 9). Die Halteeinheit 14a ist an einer dem Modulhalter 10a zugewandten Seite der Kabelmanagementeinheit 72a angeordnet. Die Halteeinheit 14a ist korrespondierend zu der Lagereinheit 66a ausgebildet. Die Halteeinheit 14a wirkt dabei in einem montierten Zustand mit der Lagereinheit 66a zusammen, insbesondere derart, dass das Kabelmanagementmodul 12a schwenkbar um die Drehachse 20a gelagert und ferner insbesondere lösbar mit dem Modulhalter 10a verbunden ist.

Dazu umfasst die Halteeinheit 14a zumindest ein Halteelement 82a, 84a. Im vorliegenden Fall umfasst die Halteeinheit 14a zwei Halteelemente 82a, 84a. Die Halteelemente 82a, 84a bilden eine Schwenkachse 26a des Kabelmanagementmoduls 12a aus, welche insbesondere parallel zu der Drehachse 20a ist. Die Halteelemente 82a, 84a sind bezüglich der Quererstreckungsrichtung der Kabelmanagementeinheit 72a beabstandet zueinander angeordnet. Die Halteelemente 82a, 84a sind zumindest im Wesentlichen identisch zueinander. Die Halteelemente 82a, 84a sind im vorliegenden Fall zumindest im Wesentlichen L-förmig und erstrecken sich dabei insbesondere in dieselbe Richtung.

Eine kürzere Seite der L-Form ist dabei parallel zu der Haupterstreckungsrichtung der Kabelmanagementeinheit 72a angeordnet. Die kürzere Seite der L-Form ist einstückig mit der Kabelmanagementeinheit 72a verbunden. Eine längere Seite der L-Form ist parallel zu der Quererstreckungsrichtung der Kabelmanagementeinheit 72a angeordnet. Die längere Seite der L-Form weist dabei ein freies Ende auf.

Zudem umfasst jedes der Halteelemente 82a, 84a ein Koppelelement 86a, 88a, welches an dem freien Ende der L-Form angeformt ist. Die Koppelelemente 86a, 88a sind zumindest im Wesentlichen bolzenförmig ausgebildet und insbesondere zu einer Kopplung mit den Lagerelementen 68a, 70a vorgesehen. Eine Montagerichtung des Kabelmanagementmoduls 12a und insbesondere der Koppelelemente 86a, 88a ist parallel zu der Drehachse 20a und erfolgt insbesondere in die Quererstreckungsrichtung der Kabelmanagementeinheit 72a, wodurch insbesondere ein Einsetzen des Kabelmanagementmoduls 12a ohne Verbiegen der Halteelemente 82a, 84a erreicht werden kann. Zudem weisen die Koppelelement 86a, 88a im vorliegenden Fall zumindest abschnittsweise eine von einer rotationsymmetrischen Form abweichende Form auf, wodurch insbesondere ein Einführen der Koppelelement 86a, 88a in die Lagerelemente 68a, 70a vereinfacht werden kann. Insbesondere ist der Modulhalter 10b und/oder das Kabelmanagementmodul 12a im vorliegenden Fall derart ausgestaltet, dass das Kabelmanagementmodul 12a beidseitig montierbar ist, insbesondere sowohl in einer, insbesondere in den Figuren dargestellten, ersten Ausrichtung als auch in einer dazu um 180° gedrehten zweiten Ausrichtung. Alternativ könnte eine Halteeinheit auch eine andere Anzahl von Halteelementen aufweisen, wie beispielsweise genau ein Halteelement und/oder zumindest drei Halteelemente. Zudem könnte zumindest ein Halteelement auch zumindest im Wesentlichen I-förmig ausgebildet sein und sich insbesondere vollständig in eine Quererstreckungsrichtung einer Kabelmanagementeinheit erstrecken.

Um das Kabelmanagementmodul 12a im montierten Zustand an dem Modulhalter 10a zu sichern, umfasst die Halteeinheit 14a ferner ein Montagesicherungselement 90a. Das Montagesicherungselement 90a ist zwischen den Halteelementen 82a, 84a angeordnet. Das Montagesicherungselement 90a ist als elastisches Rückstellelement ausgebildet. Das Montagesicherungselement 90a ist als Rastarm ausgebildet. Das Montagesicherungselement 90a ist dabei relativ zu der Montagerichtung und/oder Drehachse 20a angewinkelt und erstreckt sich ausgehend von der Kabelmanagementeinheit 72a in Richtung der Querstreckungsrichtung des Kabelmanagementeinheit 72a sowie in Richtung des Modulhalters 10a. Zudem ist das Montagesicherungselement 90a beweglich in Richtung der Kabelmanagementeinheit 72a. Eine Erstreckungslänge des Montagesicherungselements 90a in die Quererstreckungsrichtung der Kabelmanagementeinheit 72a beträgt dabei zumindest 10 % und vorteilhaft zumindest 15 % einer maximalen Quererstreckung der Kabelmanagementeinheit 72a in die Quererstreckungsrichtung. Das Montagesicherungselement 90a ist dazu vorgesehen, bei einem Montagevorgang des Kabelmanagementmoduls 12a in Richtung der Kabelmanagementeinheit 72a ausgelenkt zu werden und im montierten Zustand hinter einem der Lagerelemente 68a, 70a zu verrasten, um eine Bewegung des Kabelmanagementmoduls 12a entgegen der Montagerichtung zu blockieren. Alternativ könnte eine Halteeinheit auch eine andere Anzahl von Montagesicherungselementen aufweisen, wie beispielsweise zwei Montagesicherungselemente. Zudem ist denkbar, ein Montagesicherungselement als beliebiges anderes Montagesicherungselement auszubilden, wie beispielsweise als Verriegelungsbolzen, und/oder ein Montagesicherungselement in einem Randbereich eines Kabelmanagementmoduls anzuordnen.

Ferner ist das Kabelmanagementmodul 12a bei einer Schwenkbewegung um die Drehachse 20a von wenigstens einer ersten Halteposition (vgl. Figur 3) in wenigstens eine zweite Halteposition (vgl. Figur 4) und umgekehrt bewegbar. Dabei ist die Halteeinheit 14a dazu vorgesehen, das Kabelmanagementmodul 12a in zumindest einer der Haltepositionen, im vorliegenden Fall insbesondere beiden Haltepositionen, zu halten.

Dazu umfasst das Kabelmanagementmodul 12a zumindest ein Verformungselement 16a, 18a. Im vorliegenden Fall umfasst das Kabelmanagementmodul 12a zwei Verformungselemente 16a, 18a. Die Verformungselemente 16a, 18a sind bezüglich der Quererstreckungsrichtung der Kabelmanagementeinheit 72a beabstandet zueinander angeordnet. Die Verformungselemente 16a, 18a sind zumindest im Wesentlichen identisch zueinander. Die Verformungselemente 16a, 18a sind an einer dem Modulhalter 10a zugewandten Seite des Kabelmanagementmoduls 12a angeordnet. Die Verformungselemente 16a, 18a sind dabei Teil der Halteeinheit 14a und bilden im vorliegenden Fall insbesondere einen Teil der Schwenkachse 26a des Kabelmanagementmoduls 12a aus. Jedes der Verformungselemente 16a, 18a ist dabei einem der Halteelemente 82a, 84a zugeordnet. Im vorliegenden Fall sind die Verformungselemente 16a, 18a jeweils mit einer der längeren Seiten der L-Form der Halteelemente 82a, 84a identisch. Somit weisen die Verformungselemente 16a, 18a jeweils eine Haupterstreckungsrichtung auf, welche parallel zu der Drehachse 20a ist. Alternativ könnte ein Kabelmanagementmodul auch eine andere Anzahl von Verformungselementen aufweisen, wie beispielsweise genau ein Verformungselement und/oder zumindest drei Verformungselemente. Zudem könnte ein Verformungselement prinzipiell auch separat von einem Halteelement und/oder einer Halteeinheit ausgebildet sein.

Im Folgenden wird nun ein Verformungselement 16a der Verformungselemente 16a, 18a näher beschrieben, wobei die folgende Beschreibung, insbesondere aufgrund der zu wenigstens einem Großteil identischen Ausgestaltung der Verformungselemente 16a, 18a, auch auf das andere Verformungselement 18a übernommen werden kann.

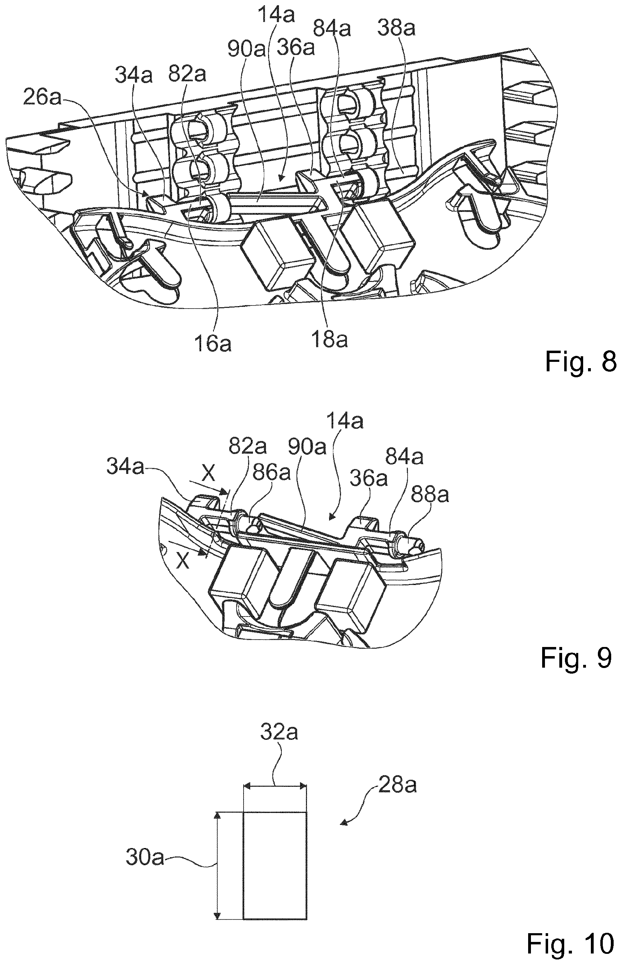

Das Verformungselement 16a ist zumindest teilweise elastisch und/oder formflexibel ausgebildet. Das Verformungselement 16a weist eine Vorzugsverformungsrichtung und/oder Vorzugsbiegerichtung auf. Die Vorzugsverformungsrichtung und/oder Vorzugsbiegerichtung ist dabei senkrecht zu der Drehachse 20a angeordnet. Dazu weist das Verformungselement 16a zumindest abschnittsweise einen Querschnitt 28a mit zwei senkrecht zueinander angeordneten Erstreckungslängen 30a, 32a auf, welche um zumindest 40 % voneinander abweichen. Im vorliegenden Fall ist der Querschnitt 28a rechteckig ausgebildet. Der Querschnitt 28a ist dabei senkrecht zu der Drehachse 20a angeordnet und insbesondere in Figur 10 dargestellt.

Eine, insbesondere längere, erste Erstreckungslänge 30a der Erstreckungslängen 30a, 32a ist dabei senkrecht zu der Haupterstreckungsebene des Kabelmanagementmoduls 12a angeordnet. Eine, insbesondere kürzere, zweite Erstreckungslänge 32a der Erstreckungslängen 30a, 32a ist senkrecht zu der ersten Erstreckungslänge 30a und parallel zu der Haupterstreckungsebene des Kabelmanagementmoduls 12a angeordnet. Die zweite Erstreckungslänge 32a definiert dabei die Vorzugsverformungsrichtung und/oder die Vorzugsbiegerichtung des Verformungselements 16a. Alternativ könnte ein Querschnitt eines Verformungselements jedoch auch oval, insbesondere ellipsenförmig, sein.

Die Verformungselemente 16a, 18a sind darüber hinaus bei der Schwenkbewegung des Kabelmanagementmoduls 12a um die Drehachse 20a zu einer wesentlichen Verformung vorgesehen. Dazu weist das Kabelmanagementmodul 12a zumindest ein Abstützelement 34a, 36a auf. Im vorliegenden Fall umfasst das Kabelmanagementmodul 12a zwei Abstützelemente 34a, 36a. Die Abstützelemente 34a, 36a sind bezüglich der Quererstreckungsrichtung der Kabelmanagementeinheit 72a beabstandet zueinander angeordnet. Die Abstützelemente 34a, 36a sind zumindest im Wesentlichen identisch zueinander. Die Abstützelemente 34a, 36a sind an einer dem Modulhalter 10a zugewandten Seite des Kabelmanagementmoduls 12a angeordnet. Die Abstützelemente 34a, 36a kontaktieren dabei den Modulhalter 10a, insbesondere den Grundkörper 59a, insbesondere dauerhaft während der Schwenkbewegung des Kabelmanagementmoduls 12a. Die Abstützelemente 34a, 36a sind Teil der Halteeinheit 14a. Jedes der Abstützelemente 34a, 36a ist dabei einem der Halteelemente 82a, 84a zugeordnet. Im vorliegenden Fall sind die Abstützelemente 34a, 36a einstückig mit den Halteelementen 82a, 84a ausgebildet. Im vorliegenden Fall sind die Abstützelemente 34a, 36a jeweils auf einer Geraden mit einer der kürzeren Seiten der L-Form der Halteelemente 82a, 84a angeordnet. Zudem ist jedes der Abstützelemente 34a, 36a einem der Verformungselemente 16a, 18a zugeordnet. Die Abstützelemente 34a, 36a weisen eine Wirkverbindung mit den Verformungselementen 16a, 18a auf. Alternativ könnte ein Kabelmanagementmodul auch eine andere Anzahl von Abstützelementen aufweisen, wie beispielsweise genau ein Abstützelement und/oder zumindest drei Abstützelemente. Zudem könnte ein Abstützelement separat von einem Halteelement und/oder einer Halteeinheit ausgebildet sein. Dabei ist prinzipiell auch denkbar, ein Abstützelement, insbesondere zusätzlich oder alternativ, an einem Modulhalter anzuordnen, insbesondere derart, dass das Abstützelement das Kabelmanagementmodul unmittelbar kontaktiert.

Die Abstützelemente 34a, 36a sind im vorliegenden Fall dazu vorgesehen, bei der Schwenkbewegung des Kabelmanagementmoduls 12a jeweils eine Kraft auf zumindest eines der Verformungselemente 16a, 18a auszuüben, insbesondere um das jeweilige Verformungselement 16a, 18a zu verformen, insbesondere in Zusammenwirken mit den Lagerelementen 68a, 70a. Gleichzeitig sind die Verformungselemente 16, 18a dazu vorgesehen, eine rückstellen Kraft auf das jeweilige Abstützelement 34a, 36a auszuüben, insbesondere in Zusammenwirken mit den Lagerelementen 68a, 70a, insbesondere um das Kabelmanagementmodul 12a in den Haltepositionen zu halten.

Um eine bei der Schwenkbewegung des Kabelmanagementmoduls 12a auf die Verformungselemente 16a, 18a einwirkende Kraft zu reduzieren, weist der Modulhalter 10a ferner zumindest eine Entlastungsausnehmung 38a auf, wobei in den Figuren 8, 11 und 12 insbesondere der Übersichtlichkeit halber lediglich eine der Entlastungsausnehmungen 38a mit einem Bezugszeichen versehen ist. Im vorliegenden Fall weist der Modulhalter 10a vier Entlastungsausnehmungen 38a auf, wobei jede der Entlastungsausnehmungen 38a zur Entlastung von Verformungselementen 16a, 18a eines der Kabelmanagementmodule 12a dient. Die Entlastungsausnehmungen 38a sind an dem Grundkörper 59a angeordnet. Die Entlastungsausnehmungen 38a sind dabei an einer den Kabelmanagementmodulen 12a zugewandten Seite des Grundkörpers 59a angeordnet. Die Entlastungsausnehmungen 38a sind als Entlastungsnuten ausgebildet. Die Entlastungsausnehmungen 38a sind übereinander angeordnet. Die Entlastungsausnehmungen 38a sind zumindest im Wesentlichen identisch zueinander.

Die Entlastungsausnehmungen 38a weisen dabei jeweils eine Haupterstreckungsrichtung auf, welche parallel zu der Drehachse 20a angeordnet ist. Im vorliegenden Fall erstrecken sich die Entlastungsausnehmungen 38a über etwa 35 % einer gesamten Haupterstreckungslänge des Modulhalters 10a. Jede der Entlastungsausnehmungen 38a ist dabei beiden Abstützelementen 34a, 36a eines Kabelmanagementmoduls 12a zugeordnet. Im vorliegenden Fall ist eine der Entlastungsausnehmungen 38a, insbesondere eine dem Kabelmanagementmodul 12a zugeordnete Entlastungsausnehmung 38a, dazu vorgesehen, die Abstützelemente 34a, 36a des Kabelmanagementmoduls 12a bei der Schwenkbewegung zumindest teilweise zu führen und hierdurch die Verformungselements 16a, 18a bei der Schwenkbewegung des Kabelmanagementmoduls 12a zumindest teilweise zu entlasten. Alternativ könnte ein Modulhalter eine andere Anzahl an Entlastungsausnehmungen, insbesondere übereinander angeordnete und/oder hintereinander angeordnete Entlastungsausnehmungen aufweisen. Vorteilhaft ist die Anzahl an Entlastungsausnehmungen dabei an eine Anzahl an von einem Modulhalter aufnehmbaren Kabelmanagementmodulen angepasst. Auch ist denkbar eine Entlastungsausnehmung als Durchbrechung, insbesondere durch einen Grundkörper eines Modulhalters auszubilden. Zudem könnte ein Modulhalter prinzipiell auch frei von Entlastungsausnehmungen sein.

Die Figuren 11 und 12 zeigen das Kabelmanagementmodul 12a in der ersten Halteposition und in der zweiten Halteposition in einer Schnittansicht. Bei einer Bewegung und/oder während eines Bewegungsvorgangs des Kabelmanagementmoduls 12a von der ersten Halteposition in die zweite Halteposition und/oder umgekehrt werden die Verformungselemente 16a, 18a dabei aufgrund einer von den Abstützelementen 34a, 36a auf die Verformungselemente 16a, 18a einwirkende Kraft elastisch verformt. Zudem drücken die Verformungselemente 16a, 18a aufgrund einer rückstellenden Kraft die Abstützelemente 34a, 36a in den Haltepositionen gegen den Grundkörper 59a, wodurch das Kabelmanagementmodul 12a in den Haltepositionen gehalten wird.

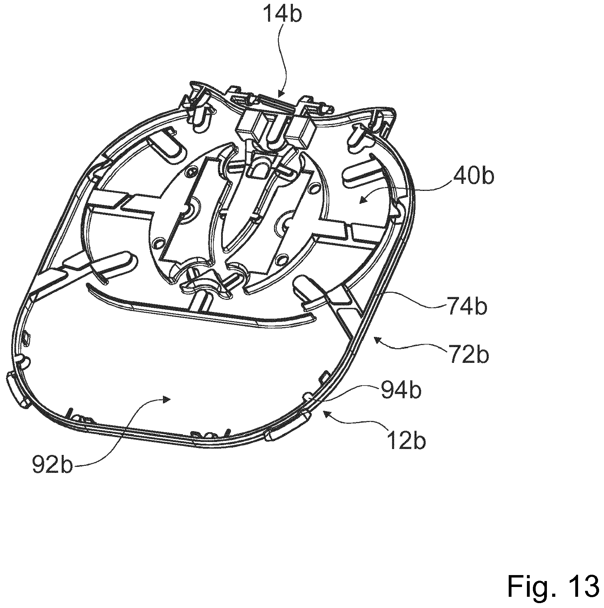

In den Figuren 13 bis 16 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 12, verwiesen werden kann. Zur Unterscheidung der Ausführungsbeispiele ist der Buchstabe a den Bezugszeichen des Ausführungsbeispiels in den Figuren 1 bis 12 nachgestellt. In den Ausführungsbeispielen der Figuren 13 bis 16 ist der Buchstabe a durch die Buchstaben b und c ersetzt.

In der Figur 13 ist ein weiteres Ausführungsbeispiel der Erfindung gezeigt. Dem Ausführungsbeispiel der Figur 13 ist der Buchstabe b nachgestellt. Das weitere Ausführungsbeispiel der Figur 13 unterscheidet sich von dem vorherigen Ausführungsbeispiel zumindest im Wesentlichen durch eine Ausgestaltung einer Kabelmanagementeinheit 72b eines Kabelmanagementmoduls 12b.

Im vorliegenden Fall weist ein Kabelaufnahmebereich 40b eines Kabelgehäuses 74b einen, insbesondere zusätzlichen, Kabelüberlängenaufnahmebereich 92b auf. Der Kabelüberlängenaufnahmebereich 92b ist dabei auf einer einer Halteeinheit 14b abgewandten Seite der Kabelmanagementeinheit 72b angeordnet. Zudem umfasst das Kabelgehäuse 74b mehrere als Rückhalteelemente ausgebildete weitere Kabelmanagementelemente 94b, um ein in dem Kabelüberlängenaufnahmebereich 92b angeordnetes Kabel in dem Kabelüberlängenaufnahmebereich 92b zu halten.

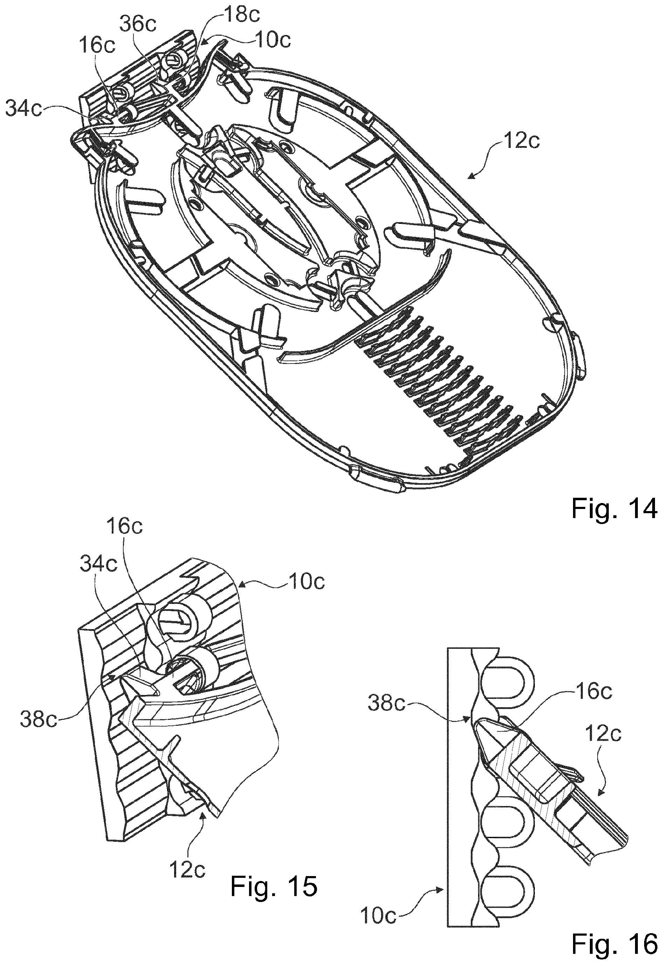

In den Figuren 14 bis 16 ist ein weiteres Ausführungsbeispiel der Erfindung gezeigt. Dem Ausführungsbeispiel der Figuren 14 bis 16 ist der Buchstabe c nachgestellt. Das weitere Ausführungsbeispiel der Figuren 14 bis 16 unterscheidet sich von den vorherigen Ausführungsbeispielen zumindest im Wesentlichen durch eine Ausgestaltung eines Modulhalters 10c.

In diesem Fall weist der Modulhalter 10c mehrere Entlastungsausnehmungen 38c auf, wobei jede der Entlastungsausnehmungen 38a zur Entlastung von Verformungselementen 16c, 18c eines Kabelmanagementmoduls 12c dient. Im vorliegenden Fall ist die dem Kabelmanagementmodul 12c zugeordnete Entlastungsausnehmung 38c dazu vorgesehen, Abstützelemente 34c, 36c des Kabelmanagementmoduls 12c in einer Halteposition des Kabelmanagementmoduls 12c zumindest teilweise aufzunehmen und hierdurch die Verformungselements 16c, 18c in der Halteposition des Kabelmanagementmoduls 12c zumindest teilweise zu entlasten.

## Patentansprüche

1. Kabelmanagementvorrichtung, insbesondere für Lichtwellenleiterkabel, mit zumindest einem Modulhalter (10a, 11 a; 10c) und mit zumindest einem Kabelmanagementmodul (12a; 12b; 12c), welches wenigstens eine Halteeinheit (14a; 14b) zur beweglichen Halterung an dem Modulhalter (10a, 11 a; 10c) aufweist, **dadurch gekennzeichnet, dass** das Kabelmanagementmodul (12a; 12b; 12c) zumindest ein Verformungselement (16a, 18a; 16c, 18c) aufweist, welches bei einer Schwenkbewegung des Kabelmanagementmoduls (12a; 12b; 12c) um eine Drehachse (20a) zu einer zumindest teilweisen Verformung vorgesehen ist und welches zumindest einen Teil einer Schwenkachse (26a) des Kabelmanagementmoduls (12a; 12b; 12c) ausbildet.

2. Kabelmanagementvorrichtung nach Anspruch 1, **dadurch gekennzeichnet, dass** das Kabelmanagementmodul (12a; 12b; 12c) bei der Schwenkbewegung von wenigstens einer ersten Halteposition in wenigstens eine zweite Halteposition und/oder umgekehrt bewegbar ist und die Halteeinheit (14a; 14b) dazu vorgesehen ist, das Kabelmanagementmodul (12a; 12b; 12c) in zumindest einer der Haltepositionen zu halten.

3. Kabelmanagementvorrichtung nach Anspruch 1 oder 2, **dadurch gekennzeichnet, dass** das Verformungselement (16a, 18a; 16c, 18c) an einer dem Modulhalter (10a, 11a; 10c) zugewandten Seite des Kabelmanagementmoduls (12a; 12b; 12c) angeordnet ist.

4. Kabelmanagementvorrichtung nach einem der vorhergehenden Ansprüche, **dadurch gekennzeichnet, dass** das Verformungselement (16a, 18a; 16c, 18c) Teil der Halteeinheit (14a; 14b) ist.

5. Kabelmanagementvorrichtung nach einem der vorhergehenden Ansprüche, **dadurch gekennzeichnet, dass** das Verformungselement (16a, 18a; 16c, 18c) eine Haupterstreckungsrichtung aufweist, welche zumindest im Wesentlichen parallel zu der Drehachse (20a) angeordnet ist.

6. Kabelmanagementvorrichtung nach einem der vorhergehenden Ansprüche, **dadurch gekennzeichnet, dass** das Verformungselement (16a, 18a; 16c, 18c) zumindest abschnittsweise einen Querschnitt (28a) mit zwei senkrecht zueinander angeordneten Erstreckungslängen (30a, 32a) aufweist, welche um zumindest 10 % voneinander abweichen.

7. Kabelmanagementvorrichtung nach Anspruch 6, **dadurch gekennzeichnet, dass** der Querschnitt (28a) zumindest im Wesentlichen rechteckig ausgebildet ist.

8. Kabelmanagementvorrichtung nach einem der vorhergehenden Ansprüche, **dadurch gekennzeichnet, dass** das Kabelmanagementmodul (12a; 12b; 12c) zumindest ein Abstützelement (34a, 36a; 34c, 36c) aufweist, welches den Modulhalter (10a, 11a; 10c) im montierten Zustand kontaktiert und bei der Schwenkbewegung eine Kraft auf das Verformungselement (16a, 18a; 16c, 18c) ausübt.

9. Kabelmanagementvorrichtung nach einem der vorhergehenden Ansprüche, **dadurch gekennzeichnet, dass** der Modulhalter (10a, 11a; 10c) zu einer zumindest teilweisen Entlastung des Verformungselements (16a, 18a; 16c, 18c) zumindest eine Entlastungsausnehmung (38a; 38c) aufweist.

10. Kabelmanagementvorrichtung nach einem der vorhergehenden Ansprüche, **dadurch gekennzeichnet, dass** das Kabelmanagementmodul (12a; 12b; 12c) zumindest einen Kabelaufnahmebereich (40a; 40b) definiert und zur Einführung wenigstens eines Kabels (56a) in den Kabelaufnahmebereich (40a; 40b) zumindest ein Einführhilfselement (42a, 44a) aufweist, welches zumindest eine Kabelführungsfläche (46a, 48a) aufweist, welche mit einer Haupterstreckungsebene des Kabelmanagementmoduls (12a; 12b) einen minimalen Winkel zwischen 5° und 85° einschließt.

11. Kabelmanagementvorrichtung nach einem der vorhergehenden Ansprüche, **dadurch gekennzeichnet, dass** das Kabelmanagementmodul (12a; 12b; 12c) zumindest einen Kabelaufnahmebereich (40a; 40b) definiert und zumindest ein in dem Kabelaufnahmebereich (40a; 40b) angeordnetes zumindest teilweise flexibel ausgebildetes Kabelsicherungselement (50a, 52a) aufweist, welches dazu vorgesehen ist, wenigstens ein in dem Kabelaufnahmebereich (40a; 40b) angeordnetes Kabel (56a) in zumindest einem Zustand zu sichern.

12. Kabelmanagementvorrichtung nach Anspruch 11, **dadurch gekennzeichnet, dass** das Kabelsicherungselement (50a, 52a) als Schaumstoffelement ausgebildet ist.

13. Kabelmanagementsystem (54a) mit zumindest einer Kabelmanagementvorrichtung nach einem der vorhergehenden Ansprüche.

14. Verfahren mit einer Kabelmanagementvorrichtung, insbesondere für Lichtwellenleiterkabel, insbesondere nach einem der Ansprüche 1 bis 12, welche zumindest einen Modulhalter (10a, 11a; 10c) und zumindest ein Kabelmanagementmodul (12a; 12b; 12c) aufweist, welches wenigstens eine Halteeinheit (14a; 14b) zur beweglichen Halterung an dem Modulhalter (10a, 11a; 10c) aufweist, **dadurch gekennzeichnet, dass** das Kabelmanagementmodul (12a; 12b; 12c) zumindest ein Verformungselement (16a, 18a; 16c, 18c) aufweist, welches bei einer Schwenkbewegung des Kabelmanagementmoduls (12a; 12b; 12c) um eine Drehachse (20a) zumindest teilweise verformt wird und welches zumindest einen Teil einer Schwenkachse (26a) des Kabelmanagementmoduls (12a; 12b; 12c) ausbildet.
